Europäisches Patentamt

(19) European Patent Office

Office européen des brevets

(11) Publication number: **0 214 945 B1**

(12) # EUROPEAN PATENT SPECIFICATION

(45) Date of publication of patent specification :
**13.03.91 Bulletin 91/11**

(51) Int. Cl.⁵ : **B65D 30/08, B65D 65/40, B32B 27/32**

(21) Application number : **86850299.8**

(22) Date of filing : **10.09.86**

(54) Low temperature impact and puncture resistant thermoplastic films and bags therefrom.

(30) Priority : **11.09.85 US 774881**

(43) Date of publication of application :
**18.03.87 Bulletin 87/12**

(45) Publication of the grant of the patent :
**13.03.91 Bulletin 91/11**

(84) Designated Contracting States :
**DE FR IT SE**

(56) References cited :
**EP-A- 0 179 639**
**FR-A- 2 377 948**
**GB-A- 1 453 621**

(73) Proprietor : **UNION CARBIDE CORPORATION**
**39 Old Ridgebury Road**
**Danbury Connecticut 06817 (US)**

(72) Inventor : **Biel, Edward Norman**
**8619 Linden Avenue**
**Munster, Indiana (US)**
Inventor : **Tucker, Edward Bryant**
**Building 13, Apt. 202 10222 South 84th Terrace**
**Palos Hills, Illinois (US)**

(74) Representative : **Halldin, Bo et al**
**Dr. Ludwig Brann Patentbyra AB P.O. Box 17192**
**S-104 62 Stockholm (SE)**

## Description

Field of the Invention

This invention relates to thermoplastic films and bag structures made therefrom having improved low temperature impact and puncture resistant properties and high resistance to heat. The invention further relates to film and bag structures comprising two layers of films which are formed from dissimilar thermoplastic resins. The bag structures are particularly suitable for use as frozen food storage containers, and subsequent heating and/or cooking of food therein such as in hot water or in a microwave oven. The bag structures may include an interlocking closure fastening device.

Background of the Invention

In the past, thermoplastic films and bag structures made therefrom for the storage of food in its refrigerated or frozen condition have employed polyethylene as the material of construction. This type of container or bag is particularly convenient for storage of food and food leftovers which are intended for later reheating or cooking. The storage bags have been formed from comparatively low density polyethylene resin, for example, polyethylene having a density of from 0.910 to 0.930 grams per cubic centimeter. However, bags made from such low density polyethylene do not have utility for holding food or food leftovers during heating or cooking because the polyethylene film cannot withstand elevated temperatures of 102°C (215°F) or higher. Even at temperatures below said aforementioned range, polyethylene film has a tendency to at least partially melt and stick to the surface of the heating means or vessel.

In order to overcome such above-indicated drawbacks when using polyethylene films, attempts have been made to employ other resins such as polyester films in elevated temperature environments. However, such films have been found to suffer sealing problems, such as providing a narrow heat sealing range, a manufacturing process limitation, and are also expensive for disposable bags. In addition, to compensate for thermal weakness, other thermoplastic resins such as polypropylene which has a melting point of between 157°C (314°F) and 163°C (325°F.), and wherein the film structure is relatively thick, may be employed at elevated cooking temperatures instead of polyethylene. However, although the melt temperature and microwave ovenable properties of thermoplastic resins such as polypropylene are superior to polyethylene, the major weakness of resins such as polypropylene is their lack of low temperature mechanical strength properties. That is, at or around freezing temperatures, polypropylene films are brittle, the impact strength and puncture resistance of the films is low, and the films are susceptible to development of cracks and pinholes therein. This latter deficiency of polypropylene makes it unsatisfactory for use in the cold storage of foods and the handling of such food containers in the frozen state. That is, when rummaging the containers in a freezer, such handling causes the development of stress cracks in the container walls, and ultimately, leaks develop therefrom when the containers are thawed.

It is also known that food packaging films may be formed from a multilayer film such as a laminate of a polyamide and polyethylene wherein an adhesive binder material or layer is provided between the polyethylene film and the polyamide film layers. However, such multilayer film materials are generally deficient when used as a container which can withstand reheating or cooking temperatures in that the thermal resistance of the polyethylene layer is less than desired

Thus, it would be desirable to provide thermoplastic films and bag structures that could be used as a food storage bag having improved low temperature impact and punteture strength properties. It would also be desirable to obtain multilayer thermoplastic films and bag structures which will provide improved physical strength properties when the films and containers are employed at elevated temperatures, such as when cooking or heating a variety of foods.

European Patent Application No. 0179639, published 30.04.86, discloses multilayer plastic articles formed as a laminate of at least one layer of a high gas barrier polymer and at least one layer of a blend of at least one propylene based polymer and less than 30 percent by weight of at least one linear low density polyethylene having a density less than about 0.93 g/cm³. The density of the polyethylene is stated to be preferably about 0.92 g/cm³. The multilayer laminate is disclosed for use in manufacturing free-standing bottles.

Summary of the Invention

The foregoing criteria for thermoplastic films and bag structures having a variety of uses, but which are particularly well adapted over a wide temperature range to contain food during freezer storage and handling, and also during reheating or cooking foods therein, are met by the present invention.

In one embodiment, the thermoplastic film and bag structure of this invention comprises an inner film layer comprising a blend of a polypropylene copolymer with between 5 percent and 30 percent by weight of a resin material selected from the group consisting of (a) very low density polyethylene having a density not higher than 0.906 g/cm³, (b) polybutylene, (c) a copolymer of ethylene-methyl acrylate, and (d) polyisobutylene, based on the weight of the blend ; and an outer film layer of a resin material having a melting temperature which is higher than that of the inner film layer.

In a further embodiment, the thermoplastic film and bag structure of this invention comprises an inner film layer comprising a blend of a polypropylene copolymer with between 5 percent and 30 percent by weight of a mixture of resin materials selected from the group consisting of (a) very low density polyethylene having a density not higher than 0.906 g/cm³ and polybutylene, (b) very low density polyethylene having a density not higher than 0.906 g/cm³ and a copolymer of ethylene-methyl acrylate, (c) very low density polyethylene having a density not higher than 0.906 g/cm³ and polyisobutylene, (d) polybutylene and a copolymer of ethylene-methyl acrylate, (e) polybutylene and polyisobutylene, and (f) a copolymer of ethylene-methyl acrylate and polyisobutylene, based on the weight of the blend ; and an outer film layer of a resin material having a melting temperature which is higher than that of the inner film layer.

As indicated from the foregoing, the inner film layer of the multilayer film and bag structure of this invention provides low temperature mechanical strength properties thereto such as impact strength and puncture resistance, while also having the ability to withstand elevated temperatures such as during cooking or reheating foods. The outer film layer of the multilayer film and bag structure of this invention serves to maintain the inner, more thermally susceptible, food contact film layer out of contact with the surfaces of the cooking or heating vessel, and thus improves the ability of the film and bag structure to withstand elevated temperatures.

In a still further embodiment, the thermoplastic film and bag structure of this invention comprises a monolayer film comprising a blend of a polypropylene copolymer with between 5 percent and 30 percent by weight of a resin material selected from the group consisting of (a) very low density polyethylene having a density not higher than 0.906 g/cm³, (b) polybutylene, (c) a copolymer of ethylene-methyl acrylate, and (d) polyisobutylene, based on the weight of the blend.

In yet another embodiment, the thermoplastic film and bag structure of this invention comprises a monolayer film comprising a blend of a polypropylene copolymer with between 5 percent and 30 percent by weight of a mixture of resin materials selected from the group consisting of (a) very low density polyethylene having a density not higher than 0.906 g/cm³ and polybutylene, (b) very low density polyethylene having a density not higher than 0.906 g/cm³ and a copolymer of ethylene-methyl acrylate, (c) very low density polyethylene having a density not higher than 0.906 g/cm³ and polyisobutylene, (d) polybutylene and a copolymer of ethylene-methyl acrylate, (e) polybutylene and polyisobutylene, and (f) a copolymer of ethylene-methyl acrylate and polyisobutylene, based on the weight of the blend.

The polypropylene copolymer material present in the film and bag structure of this invention is preferably a random poly(propylene-ethylene) copolymer resin having a melt flow rate of between 3 decigrams per minute and 10 decigrams per minute, and a density of 0.90 g/cm³, such as commercially available from Himont, Inc., Wilmington, Delaware, under the tradenames PRO-FAX⊙ SA-861 and PRO-FAX⊙ SA-752, or from Exxon Chemical Americas, Houston, Texas, under the designation PD-9012, because such polypropylene copolymer material possesses desirable extrusion characteristics and physical properties for use herein. Further, the poly(propylene-ethylene) copolymer material preferably contains up to 5 percent by weight of a slip agent masterbatch material selected from the group consisting of (a) 95 weight percent of polypropylene having a melt flow rate of 12 decigrams per minute, and 5 weight percent of an erucamide slip agent, such as available from Ampacet, Mount Vernon, New York, under the designation Product 40254, and (b) 95 weight percent of a polyethylene-methyl acrylate copolymer having a melt index of 2 decigrams per minute, and 5 weight percent of an erucamide slip agent such as available from Ampacet, Mount Vernon, New York, under the designation Product 10110.

In the best mode of this invention, the polyisobutylene material present in the inner film layer of the multilayer film structures comprises a polyisobutylene material having a melt flow rate of between 0.3 and 10.0 decigrams per minute, and a specific gravity of between 0.90 g/cm³ and 0.92 g/cm³. Such polyisobutylene materials are available from Exxon Chemicals, Linden, New Jersey, under the designation Exxon PA-30 and VISTANEX⊙polyisobutylene. The very low density polyethylene comprises a material having a density of between 0.88 g/cm³ and 0.90 g/cm³, and a melt index of between 0.3 and 2.0 decigrams per minute, such as is available from Union Carbide Corporation, Danbury, Connecticut, under the designation UCAR®FLX DFDA-1137. The polybutylene material may comprise one having a melt index of between 2 and 8 grams per 10 minutes, and a density of 0.91 g/cm³, such as available from Shell Chemical Company, Oakbrook, Illinois, under the designation Shell 8340. The ethylene-methyl acrylate copolymer material may be one having a melt index of between 1 and 10 grams per 10 minutes, and a density of about 0.94 g/cm³, such as available from Gulf Oil Chemicals Company, Orange, Texas, under the designation Gulf PE 2207.

It has been found that polypropylene homopolymers generally have inferior low temperature impact strength properties as compared to polypropylene copolymers. For example, copolymerizing propylene with ethylene will improve the low temperature impact strength properties thereof. However, as the ethylene content is increased in propylene-ethylene copolymers, such also undesirably lowers their melting point, and the film or film structure made therefrom loses its physical stability at elevated temperatures, for example, at such temperatures that may be encountered during microwave oven cooking conditions, i.e., between 121°C (250°F) and 149°C (300°F).

In accordance with the present invention, it has been found that polypropylene copolymer material when blended with between 5 percent and 30 percent by weight, preferably between 5 percent and 20 percent by weight, of a material selected from the group consisting of (a) very low density polyethylene as defined hereinbefore, (b) polybutylene, (c) a copolymer of ethylene-methyl acrylate, (d) and polyisobutylene, or (e) mixtures thereof, provides a multilayer film and multilayer film structure having improved low temperature impact and puncture strength properties and which are also stable at temperatures of up to 149°C (300°F). Further, when very low density polyethylene, polybutylene, or a copolymer of ethylene-methyl acrylate are used in combination with approximately similar amounts of polyisobutylene up to a total concentration of 20 percent by weight, based on the weight of the film, the polypropylene-based film and film structure has better low temperature impact and puncture strength properties than when either very low density polyethylene, polybutylene, ethylene-methyl acrylate copolymer, or polyisobutylene is alone blended with polypropylene at equivalent concentrations.

In addition, the afore-described resin compositions may be employed to make a monolayer film suitable for freezer to microwave oven cooking applications, preferably in the form of a suitable container such as a bag or pouch. In such event, the monolayer film comprises the afore-described polypropylene copolymer material blended with between 5 percent and 30 percent by weight, preferably between 5 percent and 20 percent by weight of a resin material selected from the group consisting of (a) very low density polyethylene as defined hereinbefore, (b) polybutylene, (c) a copolymer of ethylene-methyl acrylate, (d) polyisobutylene, and (e) mixtures thereof, based on the weight of the blend.

As indicated herein, the improved low temperature mechanical strength properties of the films of this invention are provided by incorporating therein between 5 percent and 30 percent by weight, based on the weight of the films, of a resin material selected from (a) very low density polyethylene, (b) polybutene, (c) a copolymer of ethylene-methyl acrylate, (d) polyisobutylene, and (e) mixtures thereof. It is desired that the films contain at least 5 percent by weight of said resin materials in order that the films be provided with said improved low temperature mechanical strength properties, and up to 30 percent by weight of said resin materials because greater amounts will generally undesirably reduce the melting point of the films making them less heat-resistant. Preferably, the amount of said resin materials present in the films of this invention should be no more than 20 percent by weight, based on the weight of the films, in order to keep the melting point of the films as high as possible while obtaining the improved low temperature mechanical strength properties of the films.

Further, in the best mode of this invention, the multilayer film comprises an outer film layer of a resin material having a melting temperature which is higher than that of the inner film layer. Suitable resin materials for the outer film layer include polyesters such as polyethylene terephthalate and polybutylene terephthalate, polyamides such as nylon-6, nylon-6/6, nylon-12, polysulfones, polyaryl sulfones, and mixtures thereof.

However, it is preferred that the outer film layer comprise a polyamide, and more preferably, that the polyamide comprise nylon-6 such as that commercially available under the product designations Capron®-8207 and Capron®-8209 from the Allied Chemical Company. The polyamide material contemplated herein includes nylons prepared by condensation of a dibasic acid and a diamine, and those formed by polymerization by addition reactions of amine compounds that contain both acid and amine groups on the monomer. Examples of the first type of polyamide are nylon-6/6, nylon-6/9, nylon-6/10 and nylon-6/12. An example of nylon polymerized by the addition reaction of ring compounds and, which is particularly preferred, is nylon-6, polymerized from ε-caprolactam to form polycaproamide. In addition, copolymers of the aforementioned polyamide materials are also suitable for the outer film layer herein.

In the best mode, the multilayer film structure of this invention comprises the afore-described inner film layer and the afore-described outer film layer bonded together by a bonding layer. The bonding layer preferably comprises a polypropylene-based bonding resin such as available from Chemplex Company, Rolling Meadows, Illinois, under the designation Plexa®2511, or from Mitsui Petrochemical Industries, Ltd., Houston, Texas, under the designation Admer®500. However, other suitable bonding materials may be employed such as adhesive resins selected from ionomer copolymers, modified polyolefins, ethylene-vinyl acetate copolymers, ethylene-acrylic acid copolymers, polyolefins grafted with acrylic acid, and other multipolymer compositions. The chemically modified polyolefin may be obtained from a number of polyolefin resins, such as high, medium and low density polyethylenes, polypropylenes, ethylene-vinyl acetate copolymers, and ethylene-acrylic acid copolymers, which are modified by the provision of functional groups to the polymer which have a strong affinity for the nylon molecule, and which will form strong bonds to nylon under the heat and pressure involved in the coextrusion process. These bonding materials are generally commercially available, for example, ionomer copolymers may be obtained from E. I. Du Pont de Nemours and Company under the tradename SURLYN® resin. Likewise, the modified polyolefins are available from Chemplex Company of Rolling Meadows, Illinois, under the tradename PLEXAR⊙resins, such as Plexar-3 which is a modified ethylene-vinyl acetate copolymer adapted for cast film coextrusion. Other suitable multipolymer compositions include those commercially available such as CXA-3101, from E. I. Du Pont de Nemours and Company. The bonding layer material should comprise an adhesive resin having a high melting point and resistance to heat, and the bonding layer should be sufficient to provide a bonding strength between the inner film layer and the outer film layer of at least 386.2 KN/m (200 grams/inch) of film.

The total thickness of the multilayer films and film structures of this invention preferably range from between 0.0125 mm (0.5 mil) to 0.25 mm (10 mils), more preferably from between 0.0125 mm (1 mil) to 0.25 mm (5 mils), and even more preferably, from 0.0375 mm (1.5 mils) to 0.075 mm (3 mils). The thickness of the inner film layer may range from 0.010 mm (0.4 mil) to 0.200 mm (8 mils), and preferably from 0.0125 mm (0.5 mil) to 0.050 mm (2 mils). The thickness of the outer film layer may range from 0.0025 mm (0.1 mil) to 0.025 mm (1 mil), preferably from 0.0038 mm (0.15 mil) to 0.020 mm (0.8 mil). The bonding layer between the inner film layer and the outer film layer of the multilayer films of this invention may have any suitable thickness. Typically, the thickness of the bonding layer may be from 0.0025 mm (0.1 mil) to 0.0125 mm (0.5 mil), preferably 0.0038 mm (0.15 mil), or the thickness of the bonding layer may range from 10 percent to 20 percent of the total thickness of the multilayer films. When the multilayer films are used in making food bags or containers, the total thickness of the films is preferably between 0.0188 mm (0.75 mil) and 0.100 mm (4.0 mils).

The multilayer films of this invention may have an outer film layer to inner film layer thickness ratio of between 1 : 2 and 1 : 20, but the preferred outer film layer to inner film layer thickness ratio is between 1 : 3 and 1 : 8.

It is desired that the multilayer films of this invention have the aforementioned thicknesses and film layer thickness ratios because the cost of the outer film layer material is typically expensive but it should be sufficiently thick to protect the inner film layer at elevated temperatures, and the thickness of the inner film layer should be sufficient to obtain good moisture barrier and high temperature resistance properties, while providing a film having overall toughness.

The total thickness of the monolayer films of this invention may range from 0.0125 mm (0.5 mil) to 0.125 mm (5 mils), preferably from 0.025 mm (1 mil) to 0.100 mm (4 mils), and more preferably from 0.025 mm (1 mil) to 0.075 mm (3 mils).

The multilayer films of this invention may be produced by any of several well-known methods. Preferably, the films may be produced by what is commonly known as the slot cast extrusion method. The films may also be produced by what is commonly known as the air blown film tubular extrusion method, but this latter method is less preferred. The slot cast method produces a film of better clarity than the other methods known to the art. The multilayer film may be slot cast on extrusion equipment using a slot cast multiple-orifice die or a multilayer adapter for a single layer slot cast die.

Further, the film structures of this invention may be formed into containers such as food bags or pouches with or without gusseted portions. For example, the containers may have a gusset in one or more side edges of the sidewalls of the containers, and/or a gusseted portion in the bottom portion of the containers. In addition, when the film structures are formed into containers, the containers may be provided with a closure device such as a simple string or twist tie, or the closure device may comprise an interlocking closure fastening device having any desired structural configuration. Typically, in such event, the closure device is positioned at the mouth portions of the container to facilitate opening and closing the container.

As indicated above, the film structures of this invention, are particularly suited for fabrication into bags useful for the containment of foodstuffs to be heated to a preparation temperature. These bags are generally defined by a structure resulting from folding the film to form a generally U-shaped trough and then side sealing both ends of the trough to form a simple bag or pouch. In use, the consumer will place food to be prepared, or to be reheated, inside of the pouch and close the top by some suitable means, as previously indicated. In forming a bag of this type, the outer layer will be the resin material having a melting temperature which is higher than that of the inner film layer, for example, a nylon film for that surface which comes into direct contact with the cooking or reheating vessel. The outer film layer maintains the inner, more thermally susceptible food contact layer out of contact with the surfaces of the cooking vessel and hence improves the bag's ability to withstand higher temperatures. Nylon-6, for example, has a melting or sticking temperature on the order of above 210°C (410°F), is heat-stable, and will not stick to the vessel side walls while foodstuffs are being reheated or cooked therein. The bag containing foodstuffs is intended to be immersed in a fluid such as water or employed in a microwave oven for reheating and/or cooking.

The invention will become more clear when considered together with the following examples which are set forth as being merely illustrative of the invention and which are not intended, in any manner, to be limitative thereof. Unless otherwise indicated, all parts and percentages are by weight.

In the following films of this invention were prepared by a slot cast and slot cast coextrusion process. Materials were dry blended in a drum-type tumble blender and fed to conventional type extruders. The extruder melt was fed through a coextrusion feed block and a conventional "T" or coat hanger type die. The extrudate from the die was cast on a typical chill roll casting system.

In addition, in the following examples, the impact resistance and puncture resistance of the thermoplastic films of this invention were evaluated as follows. The impact resistance of plastic films was determined by measuring the residual energy of a free-falling dart after passing through the film sample. The instrument, Kayeness, Inc. model D-2090, with cryogenics (option C), actually measures velocity differences of the dart speed caused by the resistance of the test sample. A dart of sufficient weight to pass through the film is dropped from a given height, and the free-falling dart energy absorbed by the test sample is determined from velocity readings obtained by means of light-activated digital chronographs located below the test sample. This test procedure is pursuant to A.S.T.M. D-4272-83.

The puncture resistance of plastic films was determined using an Instron Tensile-Compression Tester model #1122 with Environmental Chamber part #3111-541. In this test, a probe is passed through a test film at a constant speed of 50.8 cm/min (20 in/min). The load force required to elastically deform and ultimately puncture the test sample is recorded, along with the amount of elongation that occurs with deformation. Puncture resistance is defined as the force required to rupture a test specimen and the energy absorbed by the film during rupture.

## Example I

To evaluate the low-temperature physical properties and suitability for food freezer application of the film compositions of this invention, total energy impact tests and puncture toughness tests as afore-described were conducted on an unmodified polypropylene copolymer monolayer film structure and compared to modified polypropylene copolymer monolayer film structures. These measurements were made at 0°C (32°F) and −18°C (0°F).

The polypropylene copolymer material was a random poly(propylene-ethylene) copolymer resin having a melt flow rate of 7 decigrams per minute and a density of 0.90 g/cm$^3$ commercially available from Himont, Inc., Wilmington, Delaware, under the designation PRO-FAX⊙SA-861.

The materials employed to modify the polypropylene copolymer monolayer film structures were selected from (a) polybutylene having a melt index of 4 grams per 10 minutes, and a density of 0.91 g/cm$^3$, available from Shell Chemical Company, Oakbrook, Illinois, under the designation Shell 8340 ; (b) a copolymer of ethylene-methyl acrylate having a melt index of 6 grams per 10 minutes and a density of about 0.94 g/cm$^3$, available from Gulf Oil Chemicals Company, Orange, Texas, under the designation Gulf PE 2207 ; (c) polyisobutylene having a melt flow of 0.50 decigrams per minute and a specific gravity of about 0.91 g/cm$^3$, which is a polyisobutylene concentrate having a ratio of 2 parts polyisobutylene to 1 part of polypropylene, available from Exxon Chemicals, Linden, New Jersey, under the designation Exxon PA-30, and (d) very low density polyethylene having a density of 0.906 g/cm$^3$ and a melt index of about 0.8 decigrams per minute, available from Union Carbide Corporation, Danbury, Connecticut, under the designation UCAR FLX DFDA-1137.

The modifier materials were mixed with the polypropylene copolymer material at a concentration of 10 percent, 20 percent, and 30 percent by weight, based on the weight of the combined polypropylene copolymer and modifier materials, then the mixtures were cast into films each having a thickness of 0.050 mm (2.0 mils).

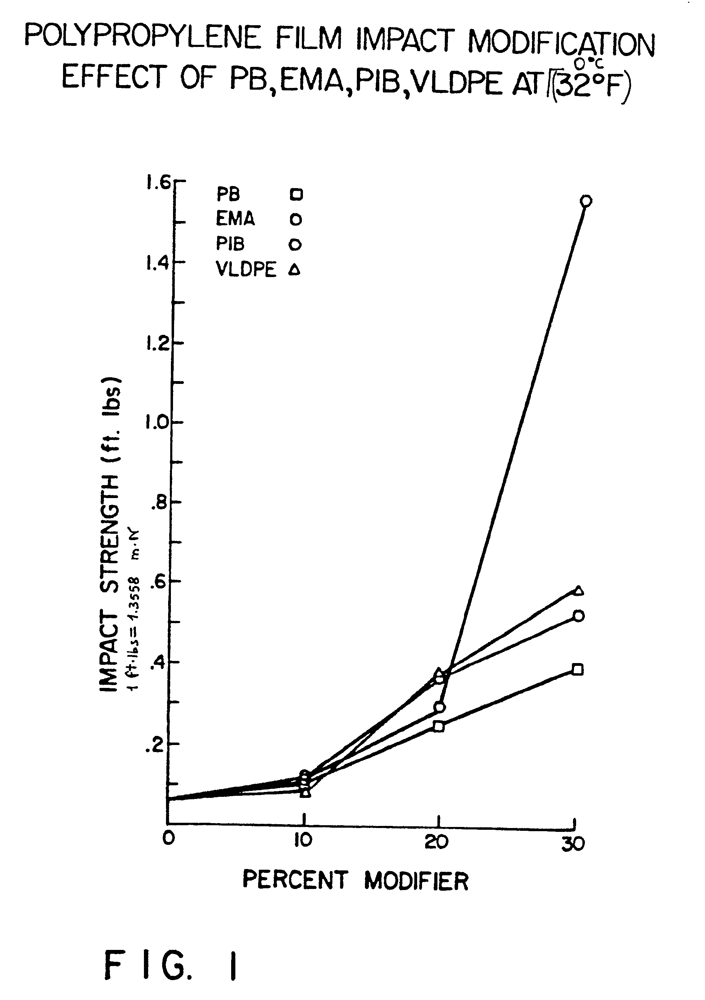

The results of the tests for total energy impact and puncture toughness on the films containing up to 30 percent by weight of the modifier materials, based on the weight of the modified polypropylene copolymer monolayer film, are shown graphically in Figures 1-4. In Figures 1-4, PB stands for polybutylene, EMA stands for the ethylene-methyl acrylate copolymer, PIB stands for polyisobutylene, and VLDPE stands for very low density polyethylene.

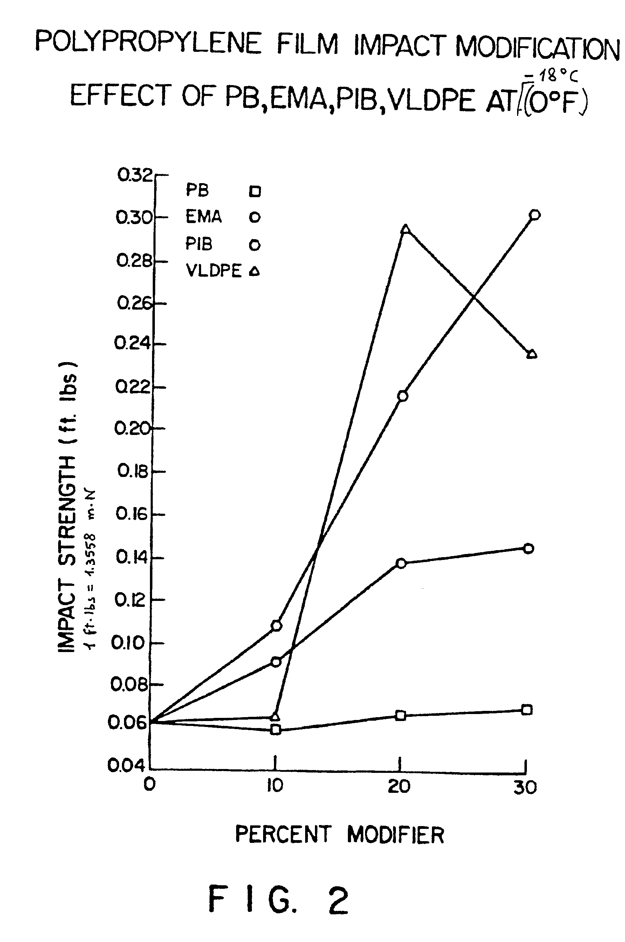

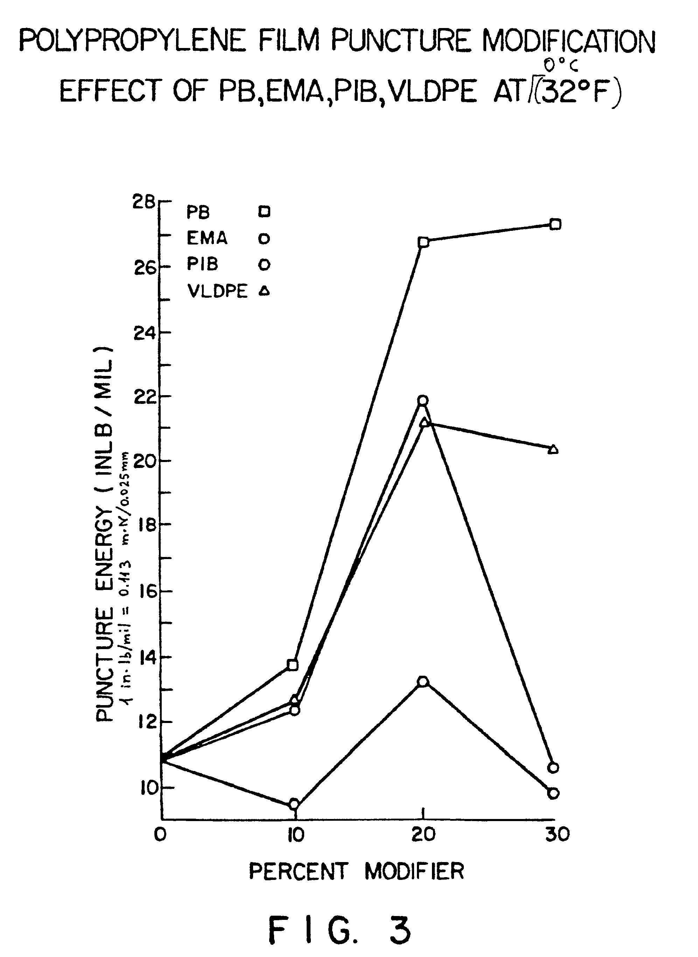

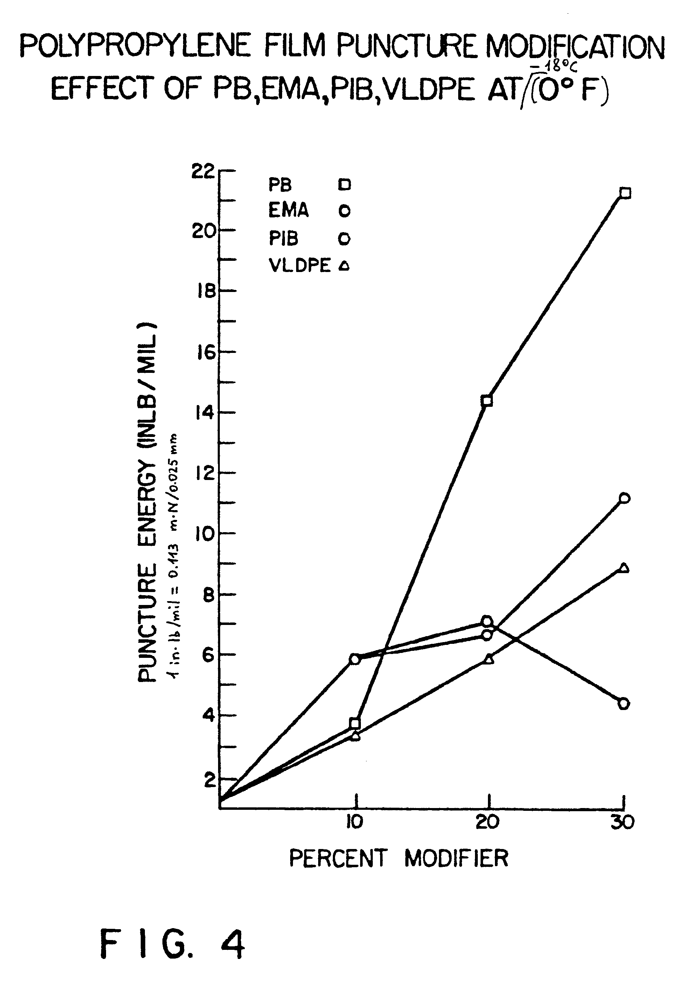

From Figures 1-4, it may be seen that all of the modifier components have some effect on the low temperature properties of the film at concentrations of up to 30 percent. Although use of the modifier polyisobutylene shows a significant improvement in impact strength properties (Figure 1 and Figure 2), it is less effective as a low temperature puncture energy modifier (Figure 3 and Figure 4). Conversely, polybutylene is not as effective an impact modifier, however, it provides a significant improvement in puncture toughness to the films. Figures 1-4 thus illustrate how monolayer films can be formulated in accordance with this invention to provide the most favorable balance of low temperature physical properties for a particular end use.

Example II

In this example, it is shown that when very low density polyethylene, polybutylene, or ethylene-methyl acrylate copolymer is used in combination with similar amounts of polyisobutylene, up to a total concentration of 10 percent by weight, based on the weight of the film, the polypropylene-based monolayer film has better low temperature impact and puncture strength properties than when any of these components or polyisobutylene is alone blended with the polypropylene material of Example I at equivalent concentrations. This synergistic effect on the properties of the films at − 18°C (0°F) and 0°C (32°F) is shown in Tables I and II. Table I gives the impact strength properties of the films, and Table II shows the improvement in puncture strength of the films, as indicated by the increase in puncture energy values. All of the films tested had a thickness of 0.050 mm (2 mils).

TABLE I
Effect of Modifier on
Impact Strength of Polyprolylene Film

| Modifier | $= 18 °C$ | Impact (0 °F) | Energy 0 °C | m.N (32 °F) |
|---|---|---|---|---|
| None | 0.0854 | (0.063) | 0.0800 | (0.059) |
| 10 % PIB | 0.1464 | (0.108) | 0.1586 | (0.117) |
| 10 % PB | 0.0800 | (0.059) | 0.1518 | (0.112) |
| 5 % PB, 5 % PIB | 0.1505 | (0.111) | 0.2956 | (0.218) |
| 10 % EMA | 0.1247 | (0.092) | 0.1681 | (0.124) |
| 5 % EMA, 5 % PIB | 0.1437 | (0.106) | 0.3173 | (0.234) |
| 10 % VLDPE | 0.0895 | (0.066) | 0.1247 | (0.092) |
| 5 % VLDPE, 5 % PIB | 0.1708 | (0.126) | 0.2088 | (0.154) |

PIB     stands for polyisobutylene as in Example I.
PB      stands for polybutylene as in Example I.
EMA     stands for ethylene-methyl acrylate copolymer as in Example I.
VLDPE stands for very low density polyethylene as in Example I.

TABLE II
Effect of Modifier on
Puncture Strength of Polypropylene Film

| Modifier | $= 18 °C$ | Puncture (0 °F) | Energy- 0 °C | Nm/0.025 mm (in-lb/mil) (32 °F) |
|---|---|---|---|---|
| None | 0.1424 | (1.26) | 1.2283 | (10.87) |
| 10 % PIB | 0.6644 | (5.88) | 1.0633 | ( 9.41) |
| 10 % PB | 0.4204 | (3.72) | 1.5571 | (13.78) |
| 5 % PB, 5 % PIB | 0.9458 | (8.37) | 1.9413 | (17.18) |
| 10 % EMA | 0.6656 | (5.89) | 1.4046 | (12.43) |
| 5 % EMA, 5 % PIB | 0.7311 | (6.47) | 2.0589 | (18.22) |
| 10 % VLDPE | 0.3921 | (3.47) | 1.4261 | (12.62) |
| 5 % VLDPE, 5 % PIB | 0.9526 | (8.43) | 2.0442 | (18.09) |

PIB     stands for polyisobutylene as in Example I.
PB      stands for polybutylene as in Example I.
EMA     stands for ethylene-methyl acrylate copolymer as in Example I.
VLDPE stands for very low density polyethylene as in Example I.

Example III

This example shows the synergistic effect of modifying the inner layer of a polypropylene-based film having the same composition, as the Example I monolayer, with very low density polyethylene, polybutylene, ethylene-methyl acrylate copolymer, and polyisobutylene, alone or in combination. The inner polypropylene-based layer had a thickness of 0.039 mm (1.55 mils). The outer layer of the multilayer film was comprised of nylon-6, available as Capron® 8209 from Allied Chemical Company, and had a film thickness of 0.0075 mm (0.30 mils). The inner layer and outer layer had between them a bonding layer comprised of a polypropylene-based bonding resin available from Mitsui Petrochemical Industries, Inc., Houston, Texas, under the designation Admer® 500, and which was present in a thickness of 0.00375 mm (0.15 mil).

The films were prepared by coextrusion into multilayer films. Other than the control multilayer film, all of the films contained a total of 20 weight percent of modifier(s).

Table III shows the total energy low temperature impact values obtained on the multilayer films. It can be seen from Table III that all of the multilayer film compositions containing either polybutylene, ethylene-methyl acrylate copolymer, or very low density polyethylene, combined with approximately an equivalent amount of polyisobutylene, had higher low temperature total energy impact values than those obtained for the films containing the individual modifier components blended with the polypropylene copolymer. Table III is as follows.

TABLE III
Effect of Low Temperature Impact
Modifiers on Coextruded Multilayer Film

| Polypropylene Layer Modification | Impact | | Energy- mN (ft-lb) | |
|---|---|---|---|---|
| | = 18 °C | (0 °F) | 0 °C | (32 °F) |
| No Modifier | 0.1735 | (0.128) | 0.3918 | (0.289) |
| 20 % PB | 0.1600 | (0.118) | 0.3159 | (0.233) |
| 20 EMA | 0.1695 | (0.125) | 0.4528 | (0.334) |
| 20 % VLDPE | 0.2671 | (0.197) | 0.4705 | (0.347) |
| 20 % PIB | 0.2495 | (0.184) | 0.1478 | (0.109) |
| 10 % PB + 10 % PIB | 0.2834 | (0.209) | 0.6074 | (0.448) |
| 10 % EMA + 10 % PIB | 0.3484 | (0.257) | 0.5220 | (0.385) |
| 10 % VLDPE + 10 % PIB | 0.3159 | (0.233) | 0.4962 | (0.366) |

PB    stands for polybutylene as in Example I.
EMA   stands for ethylene-methyl acrylate copolymer as in Example I.
VLDPE stands for very low density polyethylene as in Example I.
PIB   stands for polyisobutylene as in Example I.

Example IV

To evaluate the low temperature impact strength properties of the film compositions and film structures of this invention, actual end-use tests were conducted on quart-size pouches having a dimension of 17.8 cm (7 inches) in width and 20.3 cm (8 inches) in length. The pouches were constructed from the test films shown in Table IV below and filled with water, sealed, and placed in a freezer maintained at a temperature of − 20.6°C (− 5°F). After freezing the contents, the pouches were systematically handled, simulating normal consumer treatment in the freezer, thawed, and examined for holes and cracks in the film caused by impact stress. The results are summarized in Table IV.

In Table IV, PP-861 stands for a random polypropylene copolymer available from Hercules, Inc., Wilmington, Delaware, under the product designation PRO-FAX⊙SA-861. The designation 7042 stands for a linear, low density polyethylene material having a density of 0.918 g/cm³ available from Union Carbide Corporation, Danbury, Connecticut, under product code 7042. The designation 7047 stands for a linear, low density polyethylene material having a density of 0.918 g/cm³ available from Union Carbide Corporation, Danbury, Connecticut, under product code 7047. The designation 1137 stands for a very low density polyethylene material having a density of 0.900 g/cm³ available from Union Carbide Corporation, Danbury, Connecticut, under the product name UCAR® FLX DFDA-1137. The designation Plexar 2511 stands for a polypropylene-based bonding resin available from Chemplex Company, Rolling Meadows, Illinois, under the product name Plexar® 2511. The nylon-6 material stands for a polyamide material available from Allied Chemical Company under the product name Capron®-8209 and which has a density of 1.13 grams per cubic centimeter, and a tensile yield of 81.4 MPa (11,800 psi) per ASTM method P-638.

TABLE IV
Polypropylene-Modified Multilayer Film Freezer Tests

Film Compositions mm(Gauge Mils)

| Test Film | Inner Layer 0.029 (1.15) | Bonding Layer 0.0038 (0.15) | Outer Layer 0.0075 (0.30) | Freezer Handling % Failure |
|---|---|---|---|---|
| 1 | PP-861 | Plexar 2511 | Nylon-6 | 58 |
| 2 | PP-861 + 10 % 7042 | Plexar 2511 | Nylon-6 | 43 |
| 3 | PP-861 + 10 % 7047 | Plexar 2511 | Nylon-6 | 75 |
| 4 | PP-861 + 10 % 1137 | Plexar 2511 | Nylon-6 | 26 |

PP-861 stands for polypropylene copolymer
7042   stands for low density polyethylene
7047   stands for low density polyethylene
1137   stands for very low density polyethylene

It can be seen from Table IV that modifying the inner layer film composition of polypropylene (film 1) with a very low density polyethylene (film 4) significantly improves the low temperature impact strength properties of the multilayer film as reflected by the much lower percentage of bag failures from the freezer handling test. It can also be seen from the test results shown in Table IV that modifying the inner layer film composition of polypropylene (film 1) with a very low density polyethylene (film 4) provides a greater improvement in the low temperature impact strength properties of polypropylene than polypropylene blended with a low density polyethylene material (films 2 and 3).

To further show the advantages of very low density polyethylene (VLDPE) as a low temperature impact modifier for polypropylene film, the low temperature 0°C (32°C) impact strength was determined on single layer polypropylene films modified with very low density polyethylene or low density polyethylene at concentrations of 10 percent, 20 percent, and 30 percent by weight of the films. In Table V below, it can be seen that very low density polyethylene is significantly more effective than low density polyethylene, and especially at concentrations of 20 percent and 30 percent. All of the films tested in this example had a thickness of 0.050 mm (2 mils).

TABLE V
Polypropylene-Modified Film
Low Temperature Impact Tests

| Film Composition | Impact 0 °C (32 °F) | Energy at mN (ft-lbs) |
|---|---|---|
| PP-861 | 0.0800 | (0.059) |
| PP-861 + 10 % 1137 | 0.1247 | (0.092) |
| PP-861 + 20 % 1137 | 0.5179 | (0.382) |
| PP-861 + 30 % 1137 | 0.8203 | (0.605) |
| PP-861 + 10 % 7042 | 0.2373 | (0.175) |
| PP-861 + 20 % 7042 | 0.3430 | (0.253) |
| PP-861 + 30 % 7042 | 0.3132 | (0.231) |

Example V

In a separate series of evaluations, multilayer films were extruded, the films were formed into pouches, and actual end-use tests were performed on the pouches constructed from the test films as described in Example IV. The results are summarized in Table VI below.

## TABLE VI
### Polypropylene-Modified Multilayer Film Freezer Tests

#### Film Compositions (Gauge Mils mm)

| Test Film | Inner Layer 0.039 (1.55 mils) | Bonding Layer 0.0038 (0.15 mils) | Outer Layer 0.0075 (0.30 mils) | Freezer Handling % Failure |
|---|---|---|---|---|
| 1 | PP-861 | Admer 500 | Nylon-6 | 71 |
| 2 | PP-861 + 10 % 8340 | Admer 500 | Nylon-6 | 58 |
| 3 | PP-861 + 20 % 8340 | Admer 500 | Nylon-6 | 54 |
| 4 | PP-861 + 10 % 2207 | Admer 500 | Nylon-6 | 33 |
| 5 | PP-861 + 20 % 2207 | Admer 500 | Nylon-6 | 25 |
| 6 | PP-861 + 15 % PA30 | Admer 500 | Nylon-6 | 25 |
| 7 | PP-861 + 30 % PA30 | Admer 500 | Nylon-6 | 25 |
| 8 | PP-861 + 10 % 1137 | Admer 500 | Nylon-6 | 38 |
| 9 | PP-861 + 20 % 1137 | Admer 500 | Nylon-6 | 29 |
| 10 | PP-861 + 10 % 8340 + 15 % PA30 | Admer 500 | Nylon-6 | 13 |
| 11 | PP-861 + 10 % 2207 + 15 % PA30 | Admer 500 | Nylon-6 | 25 |
| 12 | PP-861 + 10 % 1137 + 15 % PA30 | Admer 500 | Nylon-6 | 9 |

PP-861 stands for a random polypropylene copolymer
8340 stands for polybutylene
2207 stands for ethylene-methyl acrylate copolymer
PA30 stands for polyisobutylene concentrate (2 : I PIB : PP)
1137 stands for very low density polyethylene
Admer 500 stands for polypropylene-based bonding resin

Table VI shows an improvement in reduced freezer handling failures for all of the test films 2 through 12 as compared to control test film 1. Moreover, the preferred structures, test films 10 and 12, show the lowest percent freezer handling failure, and also provide a favorable synergistic effect of using polybutene or very low density polyethylene in combination with polyisobutylene compared with a blend of polyisobutylene and any of the other components, or any of the modifier components alone, with the polypropylene copolymer material.

## Example VI

This example compares, on a qualitative basis, the performance of commercially available containers for use as food storage containers placed in a freezer and/or as food cooking containers. The commercial container products evaluated were (1) Ziploc ® Microfreez Microwave Cooking Bags marketed by Dow Chemical Company, Midland, Michigan ; (2) Seal-A-Meal ® Boilable Cooking Pouches marketed by Dazey Products Company, Industrial Airport, Kansas ; (3) Hefty Baggies ® Extra Protection Freezer Bags marketed by Mobil Oil Corporation, Pittsford, New York ; (4) Reynolds ® Oven Cooking Bags marketed by Reynolds Metals Company, Richmond, Virginia ; and (5) Ziploc ® Heavy Duty Bags, quart size, marketed by Dow Chemical Company, Indianapolis, Indiana.

Initially, the containers were examined for flaws such as cracks, rips, or holes. The number of flaws were totalled and recorded. The Ziploc Microfreez container was considered generally adequate for the aforementioned uses in that the multilayer sidewall construction comprises an inner layer of high density polyethylene having a thickness of 0.050 mm (2 mils) which provides thereto good low temperature impact properties and is thick enough to be abrasion resistant, and also comprises an outer layer of nylon which adds to the impact toughness of the container walls.

The Seal-A-Meal container was also considered generally acceptable for the aforementioned uses in that the multilayer sidewall construction comprises an inner layer of polyethylene having a thickness of 0.0375 mm (1.5 mils) providing thereto good low temperature impact properties and is thick enough to be abrasion resistant, and also comprises a tough outer layer of polyethylene-terephthalate.

The Hefty Baggies container was considered generally poor for the aforementioned uses in that the film material of the sidewalls was so thin as to make it very fragile even though the film composition is believed to be very similar to that of the Ziploc Microfreez container.

The Reynolds Oven Cooking container was considered generally poor for the aforementioned uses in that the film material of the sidewalls was found to contain numerous holes.

The Ziploc Heavy Duty bags, quart size, were considered extremely poor for the aforementioned uses in that the polyethylene film material of the sidewalls does not possess satisfactory abrasion resistance to resist scuffing in a freezer.

In comparison, the modified polypropylene films of this invention have a melting point of 157°C (314°F) which makes them useful at elevated temperatures for cooking or reheating various foods. Further, Table VII summarizes the performance of these containers in actual low temperature end-use tests. As shown therein, the modified polypropylene film structures of this invention are superior to the commercial containers tested.

### TABLE VII
### Commercial Products in Freezer Tests

| Product | Inner Layer mm (Gauge Mils) | Outer Layer mm (Gauge Mils) | Freezer Handling % Failure |
|---|---|---|---|
| Dow Ziploc Microfreez Microwave Cooking Bags | 0.0425 HDPE (1.70) | 0.0125 Nylon-6 (0.50) | 27 |
| Dazey Seal-A-Meal Boilable Cooking Pouches | 0.0375 PE (1.5) | 0.0125 PET (0.50) | 40 |
| Hefty Baggies Extra Protection Freezer Bags | 0.0275 HDPE (1.10) | 0.0025 Nylon-6 (0.10) | 50 |
| Dow Ziploc Heavy Duty Bags | 0.0675 PE (2.7) | — | 75 |
| Reynolds Oven Cooking Bags | Nylon-6/6,6 CO (1.0) 0.025 | — | 100 |
| This Invention, Film A | PP-861 + 10 % 2207 + 15 % PA30 (1.55) 0.03875 | Nylon-6 (0.30) 0.0075 | 25 |
| This Invention, Film B | PP-861 + 10 % 8340 + 15 % PA30 (1.55) 0.0378 | Nylon-6 (0.30) 0.0075 | 13 |
| This Invention, Film C | PP-861 + 10 % 1137 + 15 % PA30 (1.55) 0.03875 | Nylon-6 (0.30) 0.0075 | 9 |

In Table VII, HDPE stands for high density polyethylene ; PE stands for polyethylene, PP-861 stands for a polypropylene random copolymer ; 2207 stands for ethylene-methyl acrylate copolymer ; PA30 stands for polyisobutylene concentrate having a ratio of 2 parts of polyisobutylene to 1 part of polypropylene ; 8340 stands for polybutylene ; 1137 stands for very low density polyethylene ; and PET stands for polyethylene terephthalate.

In summary, although certain embodiments of the present invention have been described and set forth in detail, it should be further understood that other embodiments of the invention are contemplated by way of changes, modifications and variations to the description without departing from the scope of the invention as set forth in the appended claims. Such changes, modifications and variations are within the scope of this invention.

## Claims

1. A low temperature impact and puncture resistant thermoplastic multilayer film comprising an inner film layer comprising a blend of polypropylene copolymer with between 5 percent and 30 percent by weight of a resin material selected from the group consisting of (a) very low density polyethylene having a density of not higher than 0.906 g/cm³, (b) polybutylene, (c) a copolymer of ethylene-methyl acrylate, and (d) polyisobutylene, based on the weight of said blend ; and an outer film layer comprising a resin material having a melting temperature which is higher than that of said inner film layer.

2. A low temperature impact and puncture resistant thermoplastic multilayer film in accordance with claim 1 wherein said polypropylene copolymer comprises a random poly(propylene-ethylene) copolymer resin having a melt flow rate of between 3 decigrams per minute and 10 decigrams per minute, and a density of about 0.90 g/cm³.

3. A low temperature impact and puncture resistant thermoplastic multilayer film in accordance with claim 2 wherein said random poly(propylene-ethylene) copolymer resin contains up to 5 percent by weight of a slip agent masterbatch material selected from the group consisting of (a) 95 weight percent of polypropylene having a melt flow rate of 12 decigrams per minute, and 5 weight percent of erucamide, and (b) 95 weight percent of polyethylene-methyl acrylate copolymer having a melt index of 2 decigrams per minute, and 5 weight percent of erucamide.

4. A low temperature impact and puncture resistant thermoplastic multilayer film in accordance with claim 1 wherein said very low density polyethylene has a density of between 0.88 g/cm³ and 0.90 g/cm³, and a melt index of between 0.3 and 2.0 decigrams per minute.

5. A low temperature impact and puncture resistant thermoplastic multilayer film in accordance with claim 1 wherein said polybutylene has a melt index of between 2 and 8 grams per 10 minutes, and a density of 0.91 g/cm³.

6. A low temperature impact and puncture resistant thermoplastic multilayer film in accordance with claim 1 wherein said ethylene-methyl acrylate copolymer has a melt index of between 1 and 10 grams per 10 minutes, and a density of about 0.94 g/cm³.

7. A low temperature impact and puncture resistant thermoplastic multilayer film in accordance with claim 1 wherein said polyisobutylene has a melt flow rate of between 0.3 and 10.0 decigrams per minute, and a specific gravity of between 0.90 g/cm³ and 0.92 g/cm³.

8. A low temperature impact and puncture resistant thermoplastic multilayer film in accordance with claim 1 wherein said blend contains from between 5 percent and 20 percent by weight of said resin material, based on the weight of said blend.

9. A low temperature impact and puncture resistant thermoplastic multilayer film in accordance with claim 1 wherein said outer film layer comprises a thermoplastic resin material selected from the group consisting of polyesters, polyamides, polysulfones, polyaryl sulfones, and mixtures thereof.

10. A low temperature impact and puncture resistant thermoplastic multilayer film in accordance with claim 9 wherein said polyesters are selected from polyethylene terephthalate and polybutylene terephthalate.

11. A low temperature impact and puncture resistant thermoplastic multilayer film in accordance with claim 9 wherein said polyamides are selected from nylon-6, nylon-6/6, nylon-6/9, nylon-6/10, nylon-12, nylon-6/12, and copolymers and mixtures thereof.

12. A low temperature impact and puncture resistant thermoplastic multilayer film in accordance with claim 1 further including a bonding layer between said inner film layer and maid outer film layer.

13. A low temperature impact and puncture resistant thermoplastic multilayer film in accordance with claim 12 wherein said bonding layer comprises a polyolefin-based resin.

14. A low temperature impact and puncture resistant thermoplastic multilayer film in accordance with claim 1 having a thickness of from 0.0125 to 0.25 mm.

15. A low temperature impact and puncture resistant thermoplastic multilayer film in accordance with claim 1 in the form of a container.

16. A low temperature impact and puncture resistant thermoplastic multilayer film in accordance with claim 15 wherein said container includes a closure means.

17. A low temperature impact and puncture resistant thermoplastic multilayer film comprising an inner film layer comprising a blend of polypropylene copolymer with between 5 percent and 30 percent by weight of a mixture of resin materials selected from the group consisting of (a) very low density polyethylene having a density not higher than 0.906 g/cm³ and polybutylene, (b) very low density polyethylene having a density not higher than 0.906 g/cm³ and a copolymer of ethylene-methyl acrylate, (c) very low density polyethylene having a density not higher than 0.906 g/cm³ and polyisobutylene, (d) polybutylene and a copolymer of ethylene-methyl acrylate, (e) polybutylene and polyisobutylene, and (f) a copolymer of ethylene-methyl acrylate and polyisobutylene, based on the weight of said blend ; and an outer film layer comprising a resin material having a melting temperature which is higher than that of said inner layer.

18. A low temperature impact and puncture resistant thermoplastic multilayer film in accordance with claim 17 in the form of a container.

19. A low temperature impact and puncture resistant thermoplastic multilayer film in accordance with claim 18 wherein said container includes a closure means.

20. A low temperature impact and puncture resistant thermoplastic monolayer film comprising a blend of a polypropylene copolymer with between 5 percent and 30 percent by weight of a resin material selected from the group consisting of a very low density polyethylene having a density not higher than 0.906 g/cm³, (b) polybutylene, (c) a copolymer of ethylene-methyl acrylate, and (d) polyisobutylene, based on the weight of said blend.

21. A low temperature impact and puncture resistant thermoplastic monolayer film in accordance with claim 20 wherein said polypropylene copolymer comprises a random poly(propylene-ethylene) copolymer resin having a melt flow rate of between 3 decigrams per minute and 10 decigrams per minute, and a density of 0.90 g/cm³.

22. A low temperature impact and puncture resistant thermoplastic monolayer film in accordance with claim 21 wherein said random poly(propyleneethylene) copolymer resin contains up to 5 percent by weight of a slip agent masterbatch material selected from the group consisting of (a) 95 weight percent of polypropylene having a melt flow rate of 12 decigrams per minute, and 5 weight percent of erucamide, and (b) 95 weight percent of polyethylene-methyl acrylate copolymer having a melt index of 2 decigrams per minute, and 5 weight percent of erucamide.

23. A low temperature impact and puncture resistant thermoplastic monolayer film in accordance with claim 20 wherein said very low density polyethylene has a density of between 0.88 g/cm³ and 0.90 g/cm³, and a melt index of between 0.3 and 2.0 decigrams per minute.

24. A low temperature impact and puncture resistant thermoplastic monolayer film in accordance with claim 20 wherein said polybutylene has a melt index of between 2 and 8 grams per 10 minutes, and a density of 0.91 g/cm³.

25. A low temperature impact and puncture resistant thermoplastic monolayer film in accordance with claim 20 wherein said ethylene-methyl acrylate copolymer has a melt index of between 1 and 10 grams per 10 minutes, and a density of 0.94 g/cm³.

26. A low temperature impact and puncture resistant thermoplastic monolayer film in accordance with claim 20 wherein said polyisobutylene has a melt flow rate of between 0.3 and 10.0 decigrams per minute, and a specific gravity of between 0.90 g/cm³ and 0.92 g/cm³.

27. A low temperature impact and puncture resistant thermoplastic monolayer film in accordance with claim 20 wherein said blend contains from between 5 percent and 20 percent by weight of said resin material, based on the weight of said blend.

28. A low temperature impact and puncture resistant thermoplastic monolayer film in accordance with claim 20 having a thickness of from 0.0125 to 0.25 mm.

29. A low temperature impact and puncture resistant thermoplastic monolayer film in accordance with claim 20 in the form of a container.

30. A low temperature impact and puncture resistant thermoplastic monolayer film in accordance with claim 29 wherein said container includes a closure means.

31. A low temperature impact and puncture resistant thermoplastic monolayer film comprising a blend of a polypropylene copolymer with between 5 percent and 30 percent by weight of a mixture of resin materials selected from the group consisting of (a) very low density polyethylene having a density not higher than 0.906 g/cm³ and polybutylene, (b) very low density polyethylene having a density not higher than 0.906 g/cm³ and a copolymer of ethylene-methyl acrylate, (c) very low density polyethylene having a density not higher than 0.906 g/cm³ and polyisobutylene, (d) polybutylene and a copolymer of ethylene-methyl acrylate, (e) polybutylene and polyisobutylene, and (f) a copolymer of ethylene-methyl acrylate and polyisobutylene, based on the weight of said blend.

32. A low temperature impact and puncture resistant thermoplastic monolayer film in accordance with claim 31 in the form of a container.

33. A low temperature impact and puncture resistant thermoplastic monolayer film in accordance with claim 32 wherein said container includes a closure means.

**Revendications**

1. Film multicouche thermoplastique résistant aux chocs et aux perforations à basse température, consistant en une couche intérieure comprenant un mélange d'un copolymère de polypropylène avec 5% à 30% en poids d'une résine choisie dans le groupe comprenant (a) un polyéthylène très basse densité ayant une masse volumique non supérieure à 0,906 g/cm³, (b) un polybutylène, (c) un copolymère éthylène-acrylate de méthyle et (d) un polyisobutylène, sur la base du poids dudit mélange, et en une couche extérieure comprenant une résine ayant une température de fusion qui est supérieure à celle de ladite couche intérieure.

2. Film multicouche thermoplastique résistant aux chocs et aux perforations à basse température suivant la revendication 1, dans lequel le copolymère de polypropylène consiste en une résine de copolymère statistique poly(propylène-éthylène) ayant une vitesse d'écoulement à l'état fondu de 3 décigrammes par minute à 10 décigrammes par minute et une masse volumique d'environ 0,90 g/cm³.

3. Film multicouche thermoplastique résistant aux chocs et aux perforations à basse température suivant la revendication 2, dans lequel la résine de copolymère statistique poly(propylène-éthylène) contient jusqu'à 5% en poids d'un mélange-maître servant d'agent de glissement, choisi dans le groupe comprenant (a) une matière renfermant 95% en poids d'un polypropylène ayant une vitesse d'écoulement à l'état fondu de 12 décigrammes par minute et 5% en poids d'érucamide, et (b) une matière renfermant 95% en poids d'un copolymère polyéthylène-acrylate de méthyle ayant un indice de fluidité de 2 décigrammes par minute et 5% en poids d'érucamide.

4. Film multicouche thermoplastique résistant aux chocs et aux perforations à basse température suivant la revendication 1, dans lequel le polyéthylène très basse densité possède une masse volumique de 0,88 g/cm³ à 0,90 g/cm³ et un indice de fluidité de 0,3 à 2,0 décigrammes par minute.

5. Film multicouche thermoplastique résistant aux chocs et aux perforations à basse température suivant la revendication 1, dans lequel le polybutylène possède un indice de fluidité de 2 à 8 g/10 minutes et une masse volumique de 0, 91 g/cm³.

6. Film multicouche thermoplastique résistant aux chocs et aux perforations à basse température suivant la revendication 1, dans lequel le copolymère éthylèneacrylate de méthyle possède un indice de fluidité de 1 à 10 g/10 minutes et une masse volumique d'environ 0,94 g/cm³.

7. Film multicouche thermoplastique résistant aux chocs et aux perforations à basse température suivant la revendication 1, dans lequel le polyisobutylène possède une vitesse d'écoulement à l'état fondu de 0,3 à 10,0 décigrammes par minute et une masse volumique de 0,90 g/cm³ à 0,92 g/cm³.

8. Film multicouche thermoplastique résistant aux chocs et aux perforations à basse température suivant la revendication 1, dans lequel le mélange contient 5% à 20% en poids de la résine, sur la base du poids dudit mélange.

9. Film multicouche thermoplastique résistant aux chocs et aux perforations à basse température suivant la revendication 1, dans lequel la couche extérieure comprend une résine thermoplastique choisie dans le groupe comprenant des polyesters, des polyamides, des polysulfones, des polyarylsulfones et leurs mélanges.

10. Film multicouche thermoplastique résistant aux chocs et aux perforations à basse température suivant la revendication 9, dans lequel les polyesters sont choisis entre le téréphtalate de polyéthylène et le téréphtalate de polybutylène.

11. Film multicouche thermoplastique résistant aux chocs et aux perforations à basse température suivant la revendication 9, dans lequel les polyamides sont choisis entre le Nylon-6, le Nylon 6/6, le Nylon-6/9, le Nylon6/10, le Nylon-12, le Nylon-6/12 et leurs copolymères et mélanges.

12. Film multicouche thermoplastique résistant aux chocs et aux perforations à basse température suivant la revendication 1, comprenant en outre une couche de liaison entre la couche intérieure et la couche extérieure.

13. Film multicouche thermoplastique résistant aux chocs et aux perforations à basse température suivant la revendication 12, dans lequel la couche de liaison consiste en une résine à base d'une polyoléfine.

14. Film multicouche thermoplastique résistant aux chocs et aux perforations à basse température suivant la revendication 1, ayant une épaisseur de 0,0125 à 0,25 mm.

15. Film multicouche thermoplastique résistant aux chocs et aux perforations à basse température suivant la revendication 1, sous forme d'un récipient.

16. Film multicouche thermoplastique résistant aux chocs et aux perforations à basse température suivant la revendication 15, dans lequel le récipient comprend un dispositif de fermeture.

17. Film multicouche thermoplastique résistant aux chocs et aux perforations à basse température, constitué d'une couche intérieure comprenant un mélange d'un copolymère de polypropylène avec 5% à 30% en poids d'un mélange de résines choisies dans le groupe comprenant (a) un polyéthylène très basse densité, ayant une masse volumique non supérieure à 0,906 g/cm³ et un polybutylène, (b) un polyéthylène très basse densité, ayant une masse volumique non supérieure à 0,906 g/cm³, et un copolymère éthylène-acrylate de méthyle, (c) un polyéthylène très basse densité, ayant une masse volumique non supérieure à 0,906 g/cm³, et un polyisobutylène, (d) un polybutylène et un copolymère éthylène-acrylate de méthyle, (e) un polybutylène et un polyisobutylène, et (f) un copolymère éthylène-acrylate de méthyle et un polyisobutylène, sur la base du poids dudit mélange ; et d'une couche extérieure comprenant une résine ayant une température de fusion qui est supérieure à celle de ladite couche intérieure.

18. Film multicouche thermoplastique résistant aux chocs et aux perforations à basse température suivant la revendication 17, sous forme d'un récipient.

19. Film multicouche thermoplastique résistant aux chocs et aux perforations à basse température suivant la revendication 18, dans lequel le récipient comprend un dispositif de fermeture.

20. Film monocouche thermoplastique résistant aux chocs et aux perforations à basse température consistant en un mélange d'un copolymère de polypropylène avec 5% à 30% en poids d'une résine choisie dans le groupe comprenant (a) un polyéthylène très basse densité, ayant une masse volumique non supérieure à 0,906 g/cm³, (b) un polybutylène, (c) un copolymère éthylène-acrylate de méthyle et (d) un polyisobutylène, sur la base du poids dudit mélange.

21. Film monocouche thermoplastique résistant aux chocs et aux perforations à basse température suivant la revendication 20, dans lequel le copolymère de polypropylène consiste en une résine d'un copolymère statistique poly(propylène-éthylène) ayant une vitesse d'écoulement à l'état fondu de 3 décigrammes par minute à 10 décigrammes par minute et une masse volumique de 0,90 g/cm³.

22. Film monocouche thermoplastique résistant aux chocs et aux perforations à basse température suivant la revendication 21, dans lequel la résine de copolymère statistique poly(propylène-éthylène) contient jusqu'à 5% en poids d'un mélange-maître servant d'agent de glissement choisi dans le groupe comprenant (a) une matière renfermant 95% en poids d'un polypropylène ayant une vitesse d'écoulement à l'état fondu de 12 décigrammes par minute et 5% en poids d'érucamide, et (b) une matière renfermant 95% en poids d'un copolymère polyéthylène-acrylate de méthyle ayant un indice de fluidité de 2 décigrammes par minute et 5% en poids d'érucamide.

23. Film monocouche thermoplastique résistant aux chocs et aux perforations à basse température suivant la revendication 20, dans lequel le polyéthylène très basse densité possède une masse volumique de 0,88 g/cm³ à 0,90 g/cm³ et un indice de fluidité de 0,3 à 2,0 décigrammes par minute.

24. Film monocouche thermoplastique résistant aux chocs et aux perforations à basse température suivant la revendication 20, dans lequel le polybutylène possède un indice de fluidité de 2 à 8 gramme/10 minutes et une masse volumique de 0,91 g/cm³.

25. Film monocouche thermoplastique résistant aux chocs et aux perforations à basse température suivant la revendication 20, dans lequel le copolymère éthylèneacrylate de méthyle possède un indice de fluidité de 1 à grammes/10 minutes et une masse volumique de 0,94 g/cm³.

26. Film monocouche thermoplastique résistant aux chocs et aux perforations à basse température suivant la revendication 20, dans lequel le polyisobutylène possède une vitesse d'écoulement à l'état fondu de 0,3 à 10,0 décigrammes par minute et une masse volumique de 0,90 g/cm³ à 0,92 g/cm³.

27. Film monocouche thermoplastique résistant aux chocs et aux perforations à basse température suivant la revendication 20, dans lequel le mélange contient 5% à 20% en poids de la résine, sur la base du poids dudit mélange.

28. Film monocouche thermoplastique résistant aux chocs et aux perforations à basse température suivant la revendication 20, ayant une épaisseur de 0,125 à 0,25 mm.

29. Film monocouche thermoplastique résistant aux chocs et aux perforations à basse température suivant la revendication 20, sous forme d'un récipient.

30. Film monocouche thermoplastique résistant aux chocs et aux perforations à basse température suivant la revendication 29, dans lequel le récipient comprend un dispositif de fermeture.

31. Film monocouche thermoplastique résistant aux chocs et aux perforations à basse température, consistant en un mélange d'un copolymère de polypropylène avec 5% à 30% en poids d'un mélange de résines choisies dans le groupe comprenant (a) un polyéthylène très basse densité, ayant une masse volumique non supérieure à 0,906 g/cm³, et un polybutylène (b) un polyéthylène très basse densité, ayant une masse volumique non supérieure à 0,906 g/cm³, et un copolymère éthylène-acrylate de méthyle, (c) un polyéthylène très basse densité, ayant une masse volumique non supérieure à 0,906 g/cm³, et un polyisobutylène, (d) un polybutylène et un copolymère éthylèneacrylate de méthyle, (e) un polybutylène et un polyisobutylène, et (f) un copolymère éthylène-acrylate de méthyle et un polyisobutylène, sur la base du poids dudit mélange.

32. Film monocouche thermoplastique résistant aux chocs et aux perforations à basse température suivant la revendication 31, sous forme d'un récipient.

33. Film monocouche thermoplastique résistant aux chocs et aux perforations à basse température suivant la revendication 32, dans lequel le récipient comprend un dispositif de fermeture.

## Ansprüche

1. Bei niedriger Temperatur gegen Stoß und Durchlöcherung widerstandsfähige, thermoplastische Mehrschichtfolie mit einer inneren Folienschicht, die eine Mischung eines Polypropylen-Copolymers mit zwischen 5 und 30 Gew.-% bezogen auf das Gewicht der Mischung mit einem Kunstharzmaterial aufweist, welches ausgewählt ist aus der Gruppe bestehend aus

a) Polyethylen sehr niedriger Dichte, mit einer Dichte von nicht größer als 0,906 g/cm³
b) Polybutylen,
c) einem Ethylenethylacralyt-Copolymer und
d) Polyisobutylen

und einer äußeren Folienschicht, die ein Kunstharzmaterial mit einer Schmelztemperatur aufweist, welche höher ist als die der inneren Folienschicht.

2. Bei niedriger Temperatur gegen Stoß und Durchlöcherung widerstandsfähige, thermoplastische Mehrschichtfolie nach Anspruch 1, dadurch gekennzeichnet, daß das Polypropylen-Copolymer ein statistisches Poly(propylenethylen)Copolymerkunstharz mit einer Schmelzflußrate zwischen 3 Dezigramm pro Minute und 10 Dezigramm pro Minute und einer Dichte von etwa 0,9 g/cm³ aufweist.

3. Bei niedriger Temperatur gegen Stoß und Durchlöcherung widerstandsfähige, thermoplastische Mehrschichtfolie nach Anspruch 2, dadurch gekennzeichnet, daß das statistische Poly(propylen-ethylen)-Copolymerkunstharz bis zu 5 Gew.% eines Gleitmittel-Grundchargenmaterials, welches ausgewählt ist aus der Gruppe bestehend aus (a) 95 Gew.-% Polypropylen mit einer Schmelzrate von etwa 12 Dezigramm pro Minute und 5 Gew.-% Erucamid und (b) 95 Gew.-% Poly(ethylenmethylacrylat)-Copolymer mit einer Schmelzrate von 2 Dezigramm pro Minute und 5 Gew.-% Erucamid.

4. Bei niedriger Temperatur gegen Stoß und Durchlöcherung widerstandsfähige, thermoplastische Mehrschichtfolie nach Anspruch 1, dadurch gekennzeichnet, daß das Polyethylen sehr niedriger Dichte eine Dichte zwischen 0,88 g/cm³ und 0,90 g/cm³ und einen Schmelzindex zwischen 0,3 Dezigramm und 2 Dezigramm pro Minute hat.

5. Bei niedriger Temperatur gegen Stoß und Durchlöcherung widerstandsfähige, thermoplastische Mehrschichtfolie nach Anspruch 1, dadurch gekennzeichnet, daß das Polybutylen einen Schmelzindex von 2 bis 8 g pro 10 Minuten und eine Dichte von 0,91 g/cm³ hat.

6. Bei niedriger Temperatur gegen Stoß und Durchlöcherung widerstandsfähige, thermoplastische Mehrschichtfolie nach Anspruch 1, dadurch gekennzeichnet, daß das Ethylenmethylacrylat-Copolymer einen Schmelzindex von zwischen 1 und 10 g pro 10 Minuten und eine Dichte von etwa 0,94 g/cm³ hat.

7. Bei niedriger Temperatur gegen Stoß und Durchlöcherung widerstandsfähige, thermoplastische Mehrschichtfolie nach Anspruch 1, dadurch gekennzeichnet, daß das Polyisobutylen eine Schmelzflußrate von zwischen 0,3 Dezigramm und 10 Dezigramm pro Minute und ein spezifisches Gewicht von zwischen 0,90 g/cm³ und 0,92 g/cm³ hat.

8. Bei niedriger Temperatur gegen Stoß und Durchlöcherung widerstandsfähige, thermoplastische Mehrschichtfolie nach Anspruch 1, dadurch gekennzeichnet, daß die Mischung zwischen 5 und 20 Gew.-% des Kunstharzmaterials, bezogen auf das Gewicht der Mischung enthält.

9. Bei niedriger Temperatur gegen Stoß und Durchlöcherung widerstandsfähige, thermoplastische Mehrschichtfolie nach Anspruch 1, dadurch gekennzeichnet, daß die äußere Folienschicht ein thermoplastisches Kunstharzmaterial aufweist, welches ausgewählt ist aus der Gruppe, die besteht aus Polyestern, Polyamiden, Polysulfonen, Polyacrylsulfonen und Gemischen davon.

10. Bei niedriger Temperatur gegen Stoß und Durchlöcherung widerstandsfähige, thermoplastische Mehrschichtfolie nach Anspruch 9, dadurch gekennzeichnet, daß die Polyester aus Polyethylenterephthalat und Polybutylenterephthalat ausgewählt werden.

11. Bei niedriger Temperatur gegen Stoß und Durchlöcherung widerstandsfähige, thermoplastische Mehrschichtfolie nach Anspruch 9, dadurch gekennzeichnet, daß die Polyamide ausgewählt sind aus Nylon-6, Nylon-6/6, Nylon-6/10, Nylon-12, Nylon-6/12 und deren Copolymeren und Mischungen.

12. Bei niedriger Temperatur gegen Stoß und Durchlöcherung widerstandsfähige, thermoplastische Mehrschichtfolien nach Anspruch 1, zusätzlich einschließend eine Verbindungsschicht zwischen der inneren Folienschicht und der äußeren Folienschicht.

13. Bei niedriger Temperatur gegen Stoß und Durchlöcherung widerstandsfähige, thermoplastische Mehrschichtfolie nach Anspruch 12, dadurch gekennzeichnet, daß die Verbindungsschicht ein auf Polyolefin basierendes Kunstharz aufweist.

EP 0 214 945 B1

14. Bei niedriger Temperatur gegen Stoß und Durchlöcherung widerstandsfähige, thermoplastische Mehrschichtfolie nach Anspruch 1, mit einer Dicke von 0,0125 mm bis 0,25 mm.

15. Bei niedriger Temperatur gegen Stoß und Durchlöcherung widerstandsfähige, thermoplastische Mehrschichtfolie nach Anspruch 1, in Form eines Behälters.

16. Bei niedriger Temperatur gegen Stoß und Durchlöcherung widerstandsfähige, thermoplastische Mehrschichtfolie nach Anspruch 15, dadurch gekennzeichnet, daß der Behälter Verschlußmittel aufweist.

17. Bei niedriger Temperatur gegen Stoß und Durchlöcherung widerstandsfähige, thermoplastische Mehrschichtfolie mit einer inneren Folienschicht, die eine Mischung eines Polypropylen-Copolymer mit zwischen 5 und 30 Gew.-% einer Mischung von Kunstharzmaterialien aufweist, die ausgewählt sind aus der Gruppe bestehend aus (a) Polyethylen mit einer Dichte nicht größer als 0,906 g/cm³ und Polybutylen sehr niedriger Dichte, (b) Polyethylen mit einer Dichte nicht größer als 0,906 g/cm³, und einem Copolymer des Ethylen-Methylacrylats sehr niedriger Dichte, (c) Polyethylen mit einer Dichte nicht größer als 0,906 g/cm³ und Polyisobutylen sehr niedriger Dichte, (d) Polybutylen und einem Copopymer von Ethylen-Methylacrylat, (e) Polybutylen und Polyisobutylen und (f) ein Copolymer von Ethylen-Methylacrylat und Polyisobutylen bezogen auf das Gewicht der Mischung und einer äußeren Folienschicht mit einem Kunststoffmaterial mit einer Schmelztemperatur, die höher ist als die der Innenschicht.

18. Bei niedriger Temperatur gegen Stoß und Durchlöcherung widerstandsfähige, thermoplastische Mehrschichtfolie nach Anspruch 17 in Form eines Behälters.

19. Bei niedriger Temperatur gegen Stoß und Durchlöcherung widerstandsfähige, thermoplastische Mehrschichtfolie nach Anspruch 18, dadurch gekennzeichnet, daß der Behälter Verschlußmittel aufweist.

20. Bei niedriger Temperatur gegen Stoß und Durchlöcherung widerstandsfähige, thermoplastische Einschichtfolie, die eine Mischung von Polypropylen-Copolymer mit zwischen 5 und etwa 30 Gew.-% bezogen auf das Gewicht der Mischung eines Kunstharzmaterials aufweist, das ausgewählt ist aus der Gruppe, die besteht aus (a) Polyehtylen sehr niedriger Dichte mit einer Dichte von nicht größer als 0,906 g/cm³, (b) Polybutylen, (c) einem Copolymer des Ehtylen-Methylacrylats, und (d) Polyisobutylen.

21. Bei niedriger Temperatur gegen Stoß und Durchlöcherung widerstandsfähige, thermoplastische Einschichtfolie nach Anspruch 20, dadurch gekennzeichnet, daß das Polypropylen-Copolymer ein unregelmäßiges Poly(propylen-ethylen)- Copolymerkunststoffharz mit einer Schmelzflußrate zwischen 3 Dezigramm pro Minute und 10 Dezigramm pro Minute und einer Dicht von 0,90 g/cm³ aufweist.

22. Bei niedriger Temperatur gegen Stoß und Durchlöcherung widerstandsfähige, thermoplastische Einschichtfolie nach Anspruch 21, dadurch gekennzeichnet, daß das unregelmäßige Poly(propylen-ethylen)-Copolymerkunststoffharz bis etwa 5 Gew.-% eines GleitmittelGrundchargenmaterials enthält, das ausgewählt ist aus der Gruppe (a) etwa 95 Gew.-% Polypropylen mit einer Schmelzflußrate von 12 Dezigramm pro Minute und etwa 5 Gew.-% Erucamid, und (b) 95 Gew.-% PolyethylenmethylacrylatCopolymer mit einer Schmelzrate von 2 Dezigramm pro Minute und 5 Gew.-% Erucamid.

23. Bei niedriger Temperatur gegen Stoß und Durchlöcherung widerstandsfähige, thermoplastische Einschichtfolie nach Anspruch 20, dadurch gekennzeichnet, daß das Polyethylen sehr niedriger Dichte eine Dichte zwischen 0,88 g/cm³ und 0,90 g/cm³ und einem Schmelzindex zwischen 0,3 Dezigramm und 2 Dezigramm pro Minute hat.

24. Bei niedriger Temperatur gegen Stoß und Durchlöcherung widerstandsfähige, thermoplastische Einschichtfolie nach Anspruch 20, dadurch gekennzeichnet, daß das Polybutylen einen Schmelzindex zwischen 2 und 8 g pro 10 Minuten und eine Dichte von 0,91 g/cm³ hat.

25. Bei niedriger Temperatur gegen Stoß und Durchlöcherung widerstandsfähige, thermoplastische Einschichtfolie nach Anspruch 20, dadurch gekennzeichnet, daß das EthylenmethylacrylatCopolymer eine Schmelzrate zwischen 1 und 10 g pro 10 Minuten und eine Dichte von 0,94 g/cm³ hat.

26. Bei niedriger Temperatur gegen Stoß und Durchlöcherung widerstandsfähige, thermoplastische Einschichtfolie nach Anspruch 20, dadurch gekennzeichnet, daß das Polyisobutylen eine Schmelzflußrate zwischen 0,3 Dezigramm und 10 Dezigramm pro Minute und ein spezifisches Gewicht zwischen 0,90 g/cm³ und 0,92 g/cm³ hat.

27. Bei niedriger Temperatur gegen Stoß und Durchlöcherung widerstandsfähige, thermoplastische Einschichtfolie nach Anspruch 20, dadurch gekennzeichnet, daß die Mischung zwischen 5 und 20 Gew.-% bezogen auf das Gewicht der Mischung des Kunstharzmaterials enthält.

28. Bei niedriger Temperatur gegen Stoß und Durch löcherung widerstandsfähige, thermoplastische Einschichtfolie nach Anspruch 20, mit einer Dicke von 0,0125 mm bis 0,25 mm.

29. Bei niedriger Temperatur gegen Stoß und Durchlöcherung widerstandsfähige, thermoplastische Einschichtfolie nach Anspruch 20 in Form eines Behälters.

30. Bei niedriger Temperatur gegen Stoß und Durchlöcherung widerstandsfähige, thermoplastische Einschichtfolie nach Anspruch 29, dadurch gekennzeichnet, daß der Behälter Verschlußmittel aufweist.

17

31. Bei niedriger Temperatur gegen Stoß und Durchlöcherung widerstandsfähige, thermoplastische Einschichtfolie mit einer Mischung von Polypropylen-Copolymer mit zwischen 5 und etwa 30 Gew.-% bezogen auf das Gewicht der Mischung einer Mischung von Kunstharzmaterialien, die ausgewählt sind aus der Gruppe, die besteht aus (a) Polyethylen mit einer Dichte nicht größer als 0,906 g/cm³ und Polybutylen sehr niedriger Dichte, (b) Polyethylen mit einer Dichte nicht größer als 0,906 g/cm³ und einem Copolymer des Ethylenmethylacrylats sehr niedriger Dichte, (c) Polyethylen mit einer Dichte nicht größer als 0,906 g/cm³ und Polyisobutylen sehr niedriger Dichte, (d) Polybutylen und einem Copolymer des Ethylenmethylacrylats, (e) Polybutylen und Polyisobutylen und (f) einem Copolymer des Ethylenmethylacrylats und Polyisobutylen.

32. Bei niedriger Temperatur gegen Stoß und Durchlöcherung widerstandsfähige, thermoplastische Einschichtfolie nach Anspruch 31 in Form eines Behälters.

33. Bei niedriger Temperatur gegen Stoß und Durchlöcherung widerstandsfähige, thermoplastische Einschichtfolie nach Anspruch 32, dadurch gekennzeichnet, daß der Behälter Verschlußmittel aufweist.

# POLYPROPYLENE FILM IMPACT MODIFICATION
## EFFECT OF PB,EMA,PIB,VLDPE AT (32°F)

F I G. I

POLYPROPYLENE FILM IMPACT MODIFICATION
EFFECT OF PB,EMA,PIB,VLDPE AT (O°F) −18°C

F I G. 2

POLYPROPYLENE FILM PUNCTURE MODIFICATION

EFFECT OF PB, EMA, PIB, VLDPE AT (32°F)

F I G.  3

# POLYPROPYLENE FILM PUNCTURE MODIFICATION
## EFFECT OF PB,EMA,PIB,VLDPE AT (0° F)

F I G. 4